# EUROPEAN PATENT SPECIFICATION

(11) **EP 0 380 360 B1**
(45) Date of publication and mention of the grant of the patent: **05.01.1994**
(21) Application number: 90300846.4
(22) Date of filing: 26.01.1990
(51) Int. Cl.: B60S 1/38

(54) **Vertebra arrangement for a windscreen wiper blade rubber and a windscreen wiper blade arrangement incorporating such a vertebra arrangement**
Rückratanordnung für den Gummi eines Scheibenwischerblattes und eine solche Rückratanordnung enthaltende Scheibenwischerblattanlage
Agencement d'épine dorsale pour un profilé de lame d'essuie-glace et un dispositif d'essuie-glace comprenant un tel agencement d'épine dorsale

(30) Priority: 27.01.1989 GB 8901782
(43) Date of publication of application: 01.08.1990
(73) Proprietor: TRICO-FOLBERTH LIMITED, Brentford Middlesex TW8 9HP (GB)
(72) Inventor: Mower, Peter, Whitton, Twickenham, Middlesex (GB)
(74) Representative: Pedder, James Cuthbert

(56) References cited:
- EP-A- 0 260 809
- DE-U- 1 813 417
- DE-U- 1 813 417
- FR-A- 2 502 086
- FR-A- 2 502 086
- US-A- 3 616 485
- US-A- 4 343 063

## Description

This invention relates to a vertebra arrangement of a windscreen wiper blade rubber and to a windscreen wiper blade arrangement incorporating such a vertebra arrangement.

Modern windscreen wiper blades are usually formed with a harness comprising a plurality of yokes, the ends of which, adjacent to the blade rubber, are provided with claws which hold the blade rubber in place while allowing relative longitudinal movement between the rubber and the claws or all but one of the claws so that the blade, together with the rubber can flex to follow the curve of the windscreen to which it is to be applied.

The "rubber" is usally made from rubber, either natural or synthetic and, due to the characteristics of the material, it is not sufficiently rigid in a transverse direction to maintain a proper wipe characteristic. Thus, rigidity is imparted to the rubber by means of a stiffening member(s) or vertebra(e) which extend longitudinally for the length of the rubber.

One type of vertebra which is known is the so called "twin rail" vertebra. This consists of a pair of flat metal or other strips which seat in longitudinal grooves in the blade rubber. The problem then remains of maintaining the vertebra in the blade rubber and also of preventing the blade rubber from sliding out of the claws of the blade harness. In the past, moulded rubbers were used and the requisite location was provided by appropriate moulding of the rubbers. Thus, for example, the slots carrying the vertebra were closed at both ends so as to prevent the vertebra from sliding out longitudinally. The assembly of rubber and vertebra was then retained in the harness by the provision of a pocket in the rubber in to which one of the claws of the harness penetrate and are held thereby.

While this has proved to be satisfactory in practice, with the development of technology to reduce production costs, there has been a tendency to change from the relatively expensive moulded rubbers to extruded rubbers. With extruded rubbers, it is not, of course, possible to provide closed end slots so that other means of securing the vertebra in the blade rubber has been found to be necessary. Various proposals have been made for this purpose. For example, it is possible to place an end clip on one or both ends of the rubber and to secure this by providing it with slots by means of which it can be held by the harness claw. However, this solution requires one or two additional parts per blade and thus goes a long way towards taking up the cost saving made by the use of an extruded rubber.

One proposal which has been made is to provide a cut out on the inside of the vertebra strip and forming the ends of the cut out portion with inwardly extending teeth which penetrate the blade rubber adjacent to the claw position (FR-A-2502086). However, such an arrangement makes for complicated manufacture and provides a weakness in the vertebra strip.

The present invention seeks to provide a vertebra arrangement for a blade rubber and a construction of windscreen wiper blade arrangement in which some or all of the above disadvantages are reduced or substantially obviated.

According to a first aspect of the invention, a vertebra arrangement for a windscreen wiper blade rubber comprises a pair of flat strips for location in longitudinal grooves in the longitudinal sides of the blade rubber, each strip being provided with an open slot facing sideways of the strip and extending outside the line of the strip at a position to receive a claw on the blade harness when the strip is located in the blade rubber and at least one strip having a tooth portion bent or formed to the side of the strip away from the claw receiving slot so as, in use, to penetrate the material of the blade rubber, in which the said tooth portion is at the end of said strip and is bent or formed round.

Preferably only one of the strips is provided with the bent or formed end and in this case, the strip with the bent or formed end will usually be longer than the other strip.

The bent or formed end may be of reduced dimensions to aid in penetrating the material of the rubber, which rubber may be preformed with a hole to receive the bent or formed end. The bent or formed end may be pointed to assist in penetration of the material of the rubber, and in this event, the preformed hole in the rubber may be omitted.

Where the claw receiving slots are formed towards one end of the strips so as to receive the end claw of the blade harness, the bent or formed end may be provided either at this end or at the opposite end. Where both strips are provided with bent or formed ends, these may suitably be arranged at opposite ends of the respective strips.

According to a second aspect of the invention, there is provided a windscreen wiper blade arrangement with a vertebra arrangement as defined above, the windscreen wiper arrangement comprising a harness including a main yoke or lever, pivotal means for attaching the main yoke or lever to a windscreen wiper arm and at least one secondary yoke or lever pivotally connected in the middle region thereof to one end of the main yoke or lever, the free ends of the yokes or levers being provided with the said claws, the said blade rubber being carried by the claws of the yokes or levers.

The invention will now be described in greater detail, by way of example, with reference to the drawings, in which:-
Figure 1 is a plan view of a pair of strips forming a vertebra arrangementin accordance with a first embodiment of the invention;
Figure 2 is a fragmentary perspective view of a windscreen wiper blade incorporating the vertebra arrangement of figure 1;
Figure 3 is a fragmentary perspective view of the part of the blade shown in figure 2 but taken from the opposite direction;
Figures 4, 5 and 6 are views similar to figure one showing different embodiments of the vertebra arramgement, and
Figure 7 is an enlarged view of one end of a strip showing a special formation of the bent or formed end.

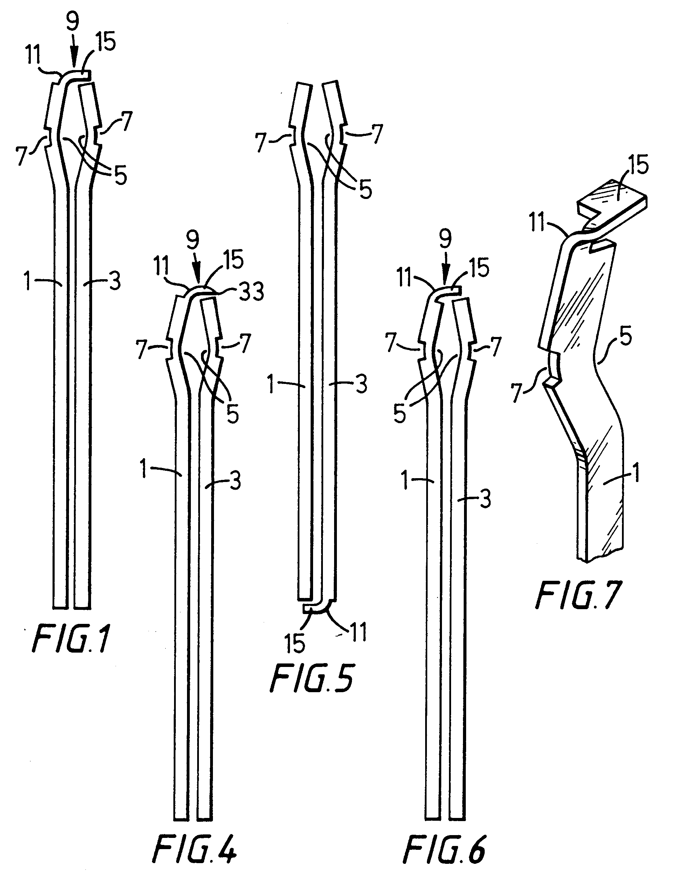

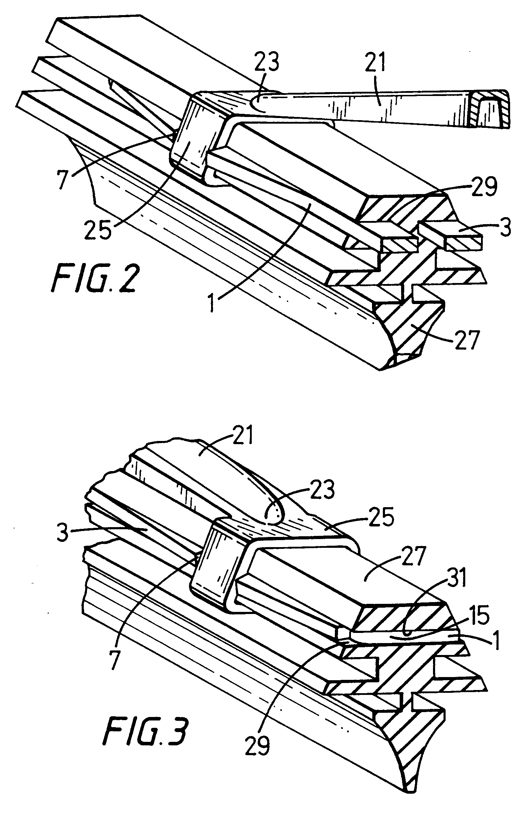

Referring firstly to figure 1, there is shown a vertebra arrangement comprising a pair of flat strips 1 and 3, suitably produced from flattened wire. The major part of each strip 1 and 3 are identical, the two strips being bowed apart at 5 and having outwardly facing slots 7 therein for the purpose of receiving the claw of a blade harness as will be described in relation to figures 2 and 3. The strip 1 is longer than the strip 3 and has its outer end 9 bent or formed round at 11 to provide a portion 15 extending substantially at right angles to the rest of the strip 1. This portion 15 is intended to penetrate the material of the blade rubber and secure the strip 1 against longitudinal movement relative to the blade rubber. It will be noted that the portion 15 is only half the width of the rest of the strip 1 and extends from the inner edge thereof.

Figures 2 and 3 show the vertebra arrangement in use. In these figures are shown fragments of a blade harness comprising a subsidiary yoke or lever 21 whose free end 23 terminates in a claw 25. The blade rubber carried by the blade harness is shown at 27. As can be seen, the two strips 1 and 3 are located in longitudinal grooves 29 in the blade rubber 27. They are retained in the harness by the fact that the claw 25 of the subsidiary yoke or lever 21 is captivted in the slot 7. The strip 1 is retained in the rubber 27 by the portion 15 extending through an aperture or hole 31 in the blade rubber. This aperture 31 may be preformed or may be produced simply by forcing the portion 15 through the material of the blade rubber 27.

In greater detail, strip 1 is securely located and retained longitudinally in the groove 29 of the blade rubber 27 by virtue of the penetration of the blade rubber 27 by the portion 15 of the strip 1 and transversely by the claws 25 of the blade harness. Because of the receivion of the claw 25 in the slot 7, the strip 1 is also prevented from longitudinal movement with respect to the harness. The remaining claws (not shown) of the harness are not received, allowing the rest of the blade rubber sufficient longitudinal play to be able to follow the curve of a windscreen to which it is applied. The second strip 3 is located in the rubber through the claw 25 which is coupled to the positively located first strip 1.

Figure 4 shows a variation of the vertebra arrangement shown in figure 1 in that the portion 15 is pointed at 33. This pointing of the portion 15 assists the penetration of the material of the blade rubber 27, particularly if its aperture 31 is not preformed.

Figure 5 shows a version of the vertebra arrangement in which the portion 15 is not provided at the same end of the strip 1 as the slots 7 but serves the same purpose. It may well be that this version is more easily fabricated accurately.

Figure 6 shows a vertebra arrangement similar to that shown in figure 1 except that the portion 15 of the strip 1 extends from its outside edge instead of its inside edge. This could reduce the risk of cracking of the material of the strip 1 when bending or forming it.

Figure 7 shows how the portion 15 of the strip 1 can be formed with a twist as well as a bend to provide a larger surface area in the longitudinal direction of the blade rubber 27. To provide a maximum surface, the portion 15 is not of reduced width compared to the remainder of the strip 1 except in the area of the bend 11.

It will be appreciated that various modifications may be made to the above described embodiments without departing from the scope of the invention. For example, portions 15 could be provided on both strips 1 and 3, one strip having the portion 15 at one end and the other strip having a portion 15 at the other end. If desired, with this construction, the slot 7 could in both cases be positioned near to the portion 15 so that each strip would receive adifferent claw and there would be no direct connection between the strips. Both strips could then be identical, doing away with the necessity of fabricating two different strips and, since the portins 15 can extend around the end of the rubber instead of through it, the need to pierce a hole in the rubber.

From the foregoing, it will be seen that the invention provides a vertebra arrangement which, in its described embodiments enables an extruded blade rubber to be secured to a blade harness without the use of additional parts or the need to close in the claws after assembly.

## Claims

1. A vertebra arrangement of a windscreen wiper blade rubber (27) comprising a pair of flat strips (1,3) for location in longitudinal grooves (29) in the longitudinal sides of the blade rubber (27), each strip (1,3) being provided with an open slot (7) facing sideways of the strip (1,3) and extending outside the line of the strip (1,3) at a position to receive a claw (25) on the blade harness (21,23) when the strip (1,3) is located in the blade rubber (27) and at least one strip (1,3) having a tooth portion (15) bent or formed to the side of the strip (1,3) away from the claw receiving slot (7) so as, in use, to penetrate the material of the blade rubber (27), characterised in that the said tooth portion (15) is at the end of said strip and is formed or bent round.

2. An arrangement as claimed in claim 1, characterised in that only one of the strips (1,3) is provided with the bent or formed end (15).

3. An arrangement as claimed in claim 2, characterised in that the strip (1,3) with the bent or formed end (15) is longer than the other strip (1,3).

4. An arrangement as claimed in any preceding claim, characterised in that the rubber (27) is preformed with a hole (31) to receive the bent or formed end (15) of the strip (1,3).

5. An arrangement as claimed in any preceding claim, characterised in that the bent or formed end (15) of the strip (1,3) is pointed (33) to assist in penetration of the material of the rubber (27).

6. An arrangement as claimed in any preceding claim, characterised in that the claw receiving slots (7) are formed towards one end of the strips (1,3) so as to receive the end claw (25) of the blade harness.

7. An arrangement as claimed in claim 6, characterised in that the bent or formed end (15) of the strip (1,3) is provided at the end adjacent to the claw receiving slot (7).

8. An arrangement as claimed in claim 6, characterised in that the bent or formed end (15) of the strip (1,3) is provided at the end away from the claw receiving slot (7).

9. An arrangement as claimed in any preceding claim, characterised in that both strips (1,3) are provided with bent or formed ends (15) at opposite ends of the respective strips (1,3).

10. A windscreen wiper blade arrangement with a vertebra arrangement as claimed in any preceding claim, characterised in that it comprises a harness including a main yoke or lever, pivotal means for attaching the main yoke or lever to a windscreen wiper arm and at least one secondary yoke or lever (21) pivotally connected in the middle region thereof to one end of the main yoke or lever, the free ends (23) of the yokes or levers (21) being provided with the said claws (25), the said blade rubber (27) being carried by the claws (25) of the yokes or levers (21).

## Patentansprüche

1. Verstärkungs-Anordnung eines Scheibenwischer-Blattgummis (27) mit einem Paar flacher Streifen (1,3) zur Anordnung in längsverlaufenden Nuten (29), die in den Längsseiten des Blattgummis (27) ausgebildet sind, wobei jeder streifen (1,3) mit einem offenen Schlitz (7) versehen ist, der zur Seite des Streifens (1,3) hin ausgerichtet ist und außerhalb der Längserstreckung des Streifens (1,3) an einer Stelle angeordnet ist, so daß er eine Klaue (25) des Blattgestelles (21,23) aufnimmt, wenn der Streifen (1,3) in dem Blattgummi (27) angeordnet ist, wobei zumindest ein Streifen (1,3) einen Zahnabschnitt (15) aufweist, der zu der von dem die Klaue aufnehmenden Schlitz (7) abgewandten Seite gebogen oder geformt ist, so daß er im Gebrauchszustand das Material des Blattgummis (27) durchdringt, dadurch gekennzeichnet, daß der Zahnabschnitt (15) am Ende des Streifens angeordnet und umgeformt oder umgebogen ist.

2. Anordnung nach Anspruch 1, dadurch gekennzeichnet, daß nur einer der Streifen (1,3) mit dem gebogenen oder geformten Ende (15) versehen ist.

3. Anordnung nach Anspruch 2, dadurch gekennzeichnet, daß der Streifen (1,3) mit dem gebogenen oder ge formten Ende (15) länger als der andere Streifen (1,3) ist.

4. Anordnung nach einem der Ansprüche 1 bis 3 dadurch gekennzeichnet, daß das Gummi (27) mit einem Loch (31) vorgeformt ist, das das gebogene oder geformte Ende (15) des Streifens (1,3) aufnimmt.

5. Anordnung nach einem der Ansprüche 1 bis 4, dadurch gekennzeichnet, daß das gebogenen oder geformte Ende (15) des Streifens (1,3) angespitzt (33) ist, um die Durchdringung des Materials des Gummis (27) zu unterstützen.

6. Anordnung nach einem der Ansprüche 1 bis 5, dadurch gekennzeichnet, daß die die Klaue aufnehmenden Schlitze (7) an einem Ende der Streifen (1,3) ausgebildet sind, so daß sie die Endklaue (25) des Blattgestells aufnehmen.

7. Anordnung nach Anspruch 6, dadurch gekennzeichnet, daß das gebogene oder geformte Ende (15) des Streifens (1,3) an dem Ende ausgebildet ist, das dem die Klaue aufnehmenden Schlitz (7) benachbart ist.

8. Anordnung nach Anspruch 6, dadurch gekennzeichnet, daß das gebogene oder geformte Ende (15) des Streifens (1,3) an dem Ende ausgebildet ist, das dem die Klaue aufnehmenden Schlitz (7) abgwandt ist.

9. Anordnung nach einem der Ansprüche 1 bis 8, dadurch gekennzeichnet, daß die beiden Streifen (1,3) an entgegengesetzten Seiten mit einem gebogenen oder geformten Ende (15) ausgebildet sind.

10. Scheibenwischer-Blattanordnung mit einer Ver starkungs-Anordnung nach einem der vorhergehenden Ansprüche, gekennzeichnet durch ein Gestell mit einem Hauptbügel oder - hebel, Schwenkmitteln zur Anbringung des Hauptbügels oder -hebels an einem Scheibenwischerarm und zumindest einem Nebenbügel oder - hebel (21), der in seinem Mittelbereich schwenkbar mit einem Ende des Hauptbügels oder -hebels verbunden ist, wobei die freien Enden (23) der Bügel oder Hebel (21) mit den Klauen (25) versehen sind und das Blattgummi (27) von den Klauen (25) der Bügel oder Hebel (21) gehalten ist.

## Revendications

1. Agencement d'épine dorsale pour un profilé de lance d'essuie-glace (27) comprenant une paire de bandes plates (1, 3) destinées à être logées dans des rainures longitudinales (29) ménagées dans les faces longitudinales du profilé de lame (27), chaque bande (1, 3) étant pourvue d'une fente ouverte (7) tournée vers la face latérale de la bande (1, 3) et s'étendant à l'extérieur du profil de la bande (1, 3) dans une position permettant de recevoir une pince (25) sur le harnais de lame (21, 23) lorsque la bande (1, 3) est située dans le profilé de lame (27) et au moins une bande (1, 3) ayant une partie dentée (15) courbée ou formée sur le coté de la bande (1, 3) à distance de la fente (7) recevant la pince de manière qu'en service, elle pénètre le matériau du profilé de lame (27), caractérisé en ce que
ladite partie dentée (15) se trouve à l'extrémité de ladite bande et est conformée ou courbée en étant arrondie.

2. Agencement selon la revendication 1, caractérisé en ce que seulement une des bandes (1, 3) est pourvue de l'extrémité courbée ou conformée (15).

3. Agencement selon la revendication 2, caractérisé en ce que la bande (1, 3) comportant l'extrémité courbée ou conformée (15) est plus longue que l'autre bande (1, 3).

4. Agencement selon l'une quelconque des revendications précédentes, caractérisé en ce que le profilé (27) est préformé avec un trou (31) destiné à recevoir l'extrémité courbée ou conformée (15) de la bande (1, 3).

5. Agencement selon l'une quelconque des revendications précédentes, caractérisé en ce que l'extrémité courbée ou conformée (15) de la bande (1, 3) est en forme de pointe (33) pour faciliter la pénétration du materiau du profilé (27).

6. Agencement selon l'une quelconque des revendications précédentes, caractérisé en ce que les fentes (7) destinées à recevoir la pince sont conformées vers une extrémité des bandes (1, 3) afin de reservoir la pince d'extrémité (25) du harnais de lame.

7. Agencement selon la revendication 6, caractérisé en ce que l'extrémité courbée ou conformée (15) de la bande (1, 3) est ménagée à l'extrémité adjacente à la fente destinée à recevoir la fente (7).

8. Agencement selon la revendication 6, caractérisé en ce que l'extrémité courbée ou conformée (15) de la bande (1, 3) est ménagée à l'extrémité éloignée de la fente recevant la fente (7).

9. Agencement selon l'une quelconque des revendications précédentes, caractérisé en ce que les deux bandes (1, 3) sont pourvues d'extrémités courbées ou conformées (15) aux extrémités opposées des bandes (1, 3) respectives.

10. Dispositif de lame d'essuie-glace comprenant un agencement d'épine dorsale selon l'une quelconque des revendications précédentes, caractérisé en ce qu'il comprend un harnais comprenant un bras ou un levier principal des moyens de pivotement pour fixer le bras ou levier principal à un bras d'essuie-glace et au moins un bras ou levier secondaire (21) relié de façon pivotante, dans sa partie médiane, à une extrémité du bras ou levier principal, les extrémités libres (23) des bras ou leviers (21) étant pourvues desdites pinces (25), ledit profilé de lame (27) étant porté par les pinces (25) des bras ou leviers (21).
